# EUROPEAN PATENT SPECIFICATION

(11) **EP 1 599 915 B1**
(45) Date of publication and mention of the grant of the patent: **18.07.2012**
(21) Application number: 04724525.3
(22) Date of filing: 31.03.2004
(51) Int. Cl.: H01M 2/34, H01M 10/0525, H01M 2/10, H02J 7/00, H01M 10/42

(54) **LITHIUM ION BATTERIES**
LITHIUMIONENBATTERIEN
BATTERIES AU LITHIUM-ION

(30) Priority: 13.06.2003 CN 03247291
(43) Date of publication of application: 30.11.2005
(73) Proprietor: Byd Company Limited, Shenzhen, Guangdong 518119 (CN)
(72) Inventor: WANG, Chuanfu, Dormitory mail-stop, Longgang, Shenzhen, Guangdong 518119 (CN); MAO, Dehe, Dormitory mail-stop, Longgang, Shenzhen, Guangdong 518119 (CN); WANG, Haitao, Dormitory mail-stop, Longgang, Shenzhen, Guangdong 518119 (CN); WU, Hua, Dormitory mail-stop, Longgang, Shenzhen, Guangdong 518119 (CN)
(74) Representative: Schöllhorn, Andreas
(86) International application number: PCT/CN2004/000298
(87) International publication number: WO 2004/112182

(56) References cited:
- WO-A1-02/33766
- WO-A1-03/003485
- CN-A- 1 264 925
- CN-A- 1 297 590
- US-A1- 2002 142 195
- US-A1- 2003 082 441
- US-B1- 6 492 058

## Description

### Cross Reference

This application claims priority to a Chinese patent application entitled "Lithium Ion Batteries" filed on June 13, 2003, having a Chinese Patent Application No. 03247291.9.

### Field of Invention

The present invention relates to a type of battery, and, in particular, a type of rechargeable lithium ion battery suitable for use in mobile phones, PDAs, and mobile equipment.

### Background of Invention

Lithium ion battery is a new type of high capacity, high output, safe, environmentally friendly, and non-pollutive rechargeable battery. It has wide applications for use in equipments such as mobile phones, laptop computers, PDAs, etc. and has become the standard accessory for these types of equipments.

Lithium ion battery typically is comprised of a battery core, a battery protective circuit, a plastic external body shell, etc. The battery protective circuit is placed within the body shell between the battery core and the shell. The plastic external body shell is used to secure the corresponding position between the battery core and the battery protective circuit and to protect the battery protective circuit. Within the battery core, there are positive and negative electrodes, one or more separators, and electrolyte. The entire battery core is encased in a metal external casing. On the exterior of the battery core, there are positive and negative terminals connecting to the interior positive and negative electrode of the battery core. The positive and negative terminals are first connected to the battery protective circuit. Then through the contact points of the battery protective circuit, it is connected to the body or the charger of the mobile phone, laptop computer, PDA, etc. to carry the load of such devices. This type of battery needs a separately manufactured plastic body shell for encasing the battery core, and the cost is higher for the manufacturing for such plastic body shell. Also, it is more complicated and less convenient in the assembling of the battery core into a battery product.

In order to solve the above problem, one newer type of lithium ion batteries use a plastic external shell, where a cover is injection molded on to each of the top and bottom end of the battery core. The battery protective circuit is glued between the cover and the battery core. On top of the cover, there are openings and holes provided to allow the contact plates of the battery be exposed to the outside world, where the contact plates are connected to the battery protective circuit and the positive and negative electrodes. The disadvantage of this method is that the injection molding process is more complicated, the cost is higher, and the adhesion between the cover and the battery core is low as well.

In order to increase the hold between the cover and the battery core, Japanese company, Matsushita, first welds a nail to each of the two ends of the shell body. Then, it uses an injection molding method to manufacture the cover that is secured to the battery core. This method to a certain degree increased the hold between the cover and the battery core. However, the manufacturing process is more complex and it still does not resolve the cost issue.

The disadvantages of the prior art illustrate the need for a battery structure that is conducive to the manufacturing and assembling process and yet it is low in cost. The prior art is represented e.g. by documents US 2002142195 or WO 03003485.

### Summary of Invention

An object of the present invention is to provide a battery structure having a strong hold between the battery cover and the battery core.

Another object of the present invention is to provide a battery structure having a simple manufacturing and assembling process and low overall cost.

The invention is defined in claim 1.

Briefly, a rechargeable battery is disclosed, comprising: a cover having an elongated rectangular shape with two opposite ends, said cover having a plurality of contact openings, a plurality of test openings, a screw opening on each of said two ends, and a position notch on each of said two ends; wherein said cover is made by injection molding using plastic or rubber; a battery protective circuit providing functions preventing overcharging, excessive-discharge and excessive current; a battery core having an elongated rectangular shape substantially matching the shape of said cover, wherein said battery core having a metal outer shell, and a top-side plate that is welded to the outer shell of said battery core to seal said battery core; wherein said top-side plate having a thickness of 0.3 mm - 0.6 mm and having disposed thereon a negative terminal, a release valve, a fill hole, position holes and screw holes; and a structural support placed between said battery core and said cover, said structural support and said cover encasing said battery protective circuit; wherein said cover covering said battery protective circuit, and said cover and said battery protective circuit being secured on to said battery core to form an integrated battery; and wherein said battery core having positive and negative terminals connected to said battery protective circuit and, through said battery protective circuits, to contact plates exposed through said cover.

An advantage of the present invention is that it provides a battery structure having a strong hold between the battery cover and the battery core.

Another advantage of the present invention is that it provides a battery structure having a simple manufacturing and assembling process and low overall cost.

### Brief Description of the Drawings

The combination of figures and embodiments further describe the present invention:
Figure 1 is an external view of the complete lithium ion battery.
Figure 2 is an external view of the battery core of the lithium ion battery.
Figure 3 is a break out of an embodiment of the structure of the battery cover and the battery core.
Figure 4 is a break out of another embodiment of the structure of the battery cover and the battery core, showing the structural support piece.
Figures 5a and 5b illustrate the two sides of the printed-circuit-board of an embodiment of the present invention.
Figure 6 illustrates another embodiment of the present invention where the cover and the structural support is one unit.
Figure 7 illustrates still another embodiment of the present invention where the cover and the structural support is one unit.

### Detailed Description of the Preferred Embodiments

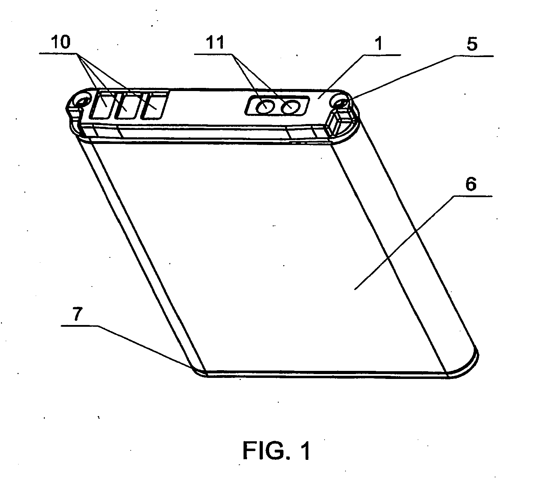

In a presently preferred embodiment of the present invention, a type of battery structure, having a battery core, battery protective circuit and a cover, is disclosed. Referring to Fig. 1, on the cover 1, there are various openings and holes, and the cover 1 is manufactured as a separate unit. The cover 1 is an elongated, rectangular-shaped structure. In this structure, the cover 1 is manufactured to have a certain height in order to provide a safe distance between the opening at the top of the battery core 6 and the cover 1. There is a screw opening 5 on each of the two ends of the cover 1, and there is a screw inserted through each of the screw opening 5 on top of the cover 1 and the screws are fastened to a screw hole on top of the battery core 6 in order to secure the cover 1 to the battery core 6. There are also a number of contact openings 10 and a number of test openings 11.

As an improvement over the prior art, the cover 1 is first injection molded using rubber or plastic. There can be a top cover 1 and a bottom plate 7 in order to provide for the necessary spacing support to the final battery product. A battery protective circuit can be placed between the top cover 1 and the battery core 6.

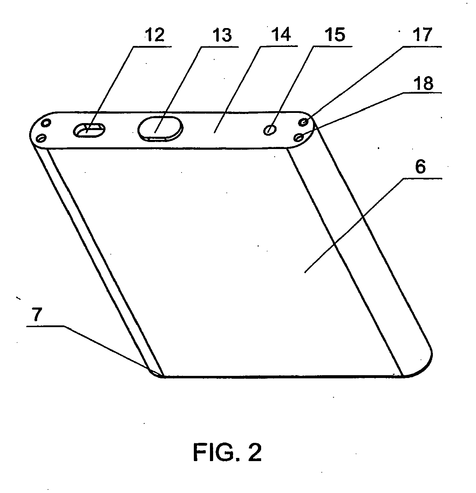

Referring to Fig. 2, an embodiment of the body of the battery core 6 is illustrated. Here, the battery core is a rectangular-shaped with long oval top and bottom ends. The sides of the battery core are round. Inside the battery core 6, there are positive and negative electrodes, positive and negative terminals, insulation for separating the positive and negative electrodes, and electrolyte. The battery core 6 is sealed and encased in a metal shell, the metal of which can be aluminum, stainless steel, electro-plated nickel, etc. On the top of the battery core 6, there is a top-side plate 14 having the same material as the metal shell of the battery core 6. After inserting the electrodes and the various inside components into the battery core, the top-side plate is welded to the metal shell body of the battery core 6. On the top-side plate 14, there is a negative terminal 13 connected to the negative electrode inside of the battery core 6. The positive electrode of the battery core 6 is connected to the metal shell of the battery core 6 and the top-side plate 14. A metal plate is connected to the top-side plate 14 to form the positive terminal. There is an insulation barrier between the negative terminal 13 and the top-side plate 14 connecting to the positive terminal. On the top-side plate 14, there is also a release valve 12 and a fill hole 15. The release valve 12 automatically releases excessive internal pressure built-up in order to prevent battery explosion. The fill hole 15 is used, after the battery core 6 is completely assembled, to fill electrolyte into the interior of the battery core 6. The fill hole 15 is sealed after filling the electrolyte, and it can be sealed by welding a metal plate over it. There is also a screw hole 17 on each side of the top-side plate 14 for receiving screws to secure the cover to the top-side plate 14. There is also a position hole 18 on each end of the top-side plate 14. These position holes allow the cover to be quickly and accurately positioned on to the top-side plate 14, thus facilitating the manufacturing and assembling process.

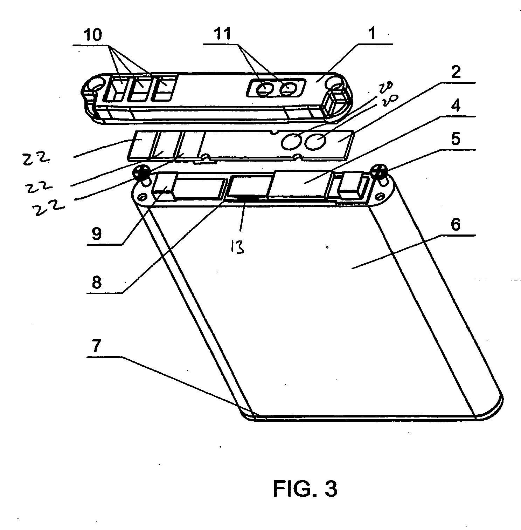

Referring to Fig. 3, the battery protective circuit 2 and a safety unit 4 are placed between cover 1 and the battery core 6. The battery protective circuit is designed for ease of manufacturing and assembling as well. The battery protective circuit 2 provides overcharging, excessive-discharging, and excessive current functions, preventing the battery from overcharging, excessive-discharging, and excessive current during charging, and other conditions that may damage the battery. The battery protective circuit is on a PCB. On one side of said battery protective circuit there are contact points 22 for contacting said battery and test points 20 for testing said battery. The safety unit 4 provides a temperature protection function, among other safety related functions. If the temperature rises excessively high during charging, safety unit 4 will automatically cut off the source to protect the battery. The negative terminal 13 (see Fig. 2), which is connected to the negative electrodes of the battery core 6, is first connected to the safety unit 4, and through the safety unit 4 is connected to the battery protective circuit 2. The positive terminal, which is connected to the top-side plate 14 on top of the battery core 6, through the connecting unit 9 connects directly to the battery protective circuit 2. The battery protective circuit 2 interacts, for example, within the body of mobile phones, laptop computers, PDAs, etc. or with the respective charging unit.

The battery protective circuit 2 connects to positive and negative contact plates and it provides contact points for identifying the battery type. On the cover 1, there are square openings 10 for allowing exterior contact to the contact plates of the battery protective circuit board 2, and circular openings 11 for allowing testing of the battery and the battery protective circuit 2. The positive and negative electrodes of the battery core 6, through each respective terminal, safety unit 4, and the battery protective circuit 2, and through the positive and negative contact plates of the battery protective circuit, connect with the load or charger, in order to provide power to the device or equipment or to receive charge to the battery.

The top-side plate 14 on top of the battery core 6 has a sufficient thickness to ensure that there is a safe distance between the openings and the battery core 6. The outer shell of the battery core 6 starts as an enclosure with one open end. As described above, the top-side plate 14 serves as the cover to the open end of the outer shell of the battery core 6 and the top-side plate 14 is welded to the outer shell of the battery core 6 to seal the battery core 6 and to ensure that the battery core does not leak during usage. After much empirical studies and research, when using aluminum as the common material for the outer shell of the battery, the top-side plate 14 thickness should be over 0.3 mm, preferably between 0.3 to 0.6 mm. If it is less than 0.3 mm, then it is easier for leakage to occur. If it is greater than 0.6 mm, it would result in waste and it would not be necessary.

A screw is inserted through a screw opening on each side of the cover and screwed into the screw holes (Fig. 2, 17) on the battery core 6 in order to secure the cover 1 to the battery core 6. A piece of insulation paper is placed between the battery core 6 and the battery protective circuit 2 to insulate them. The cover 1 is first made by injection molding using rubber or plastic. Due to the low cost of rubber or plastic as the raw material and that the injection molding process is also a simple manufacturing method, the overall manufacturing and assembling process is simplified and the overall cost is lowered.

The outer shell of the battery core 6 is typically made from the metal aluminum. Aluminum is typically soft, thus the openings on the outer shell of the battery core 6 need not have threads in the screw holes. When the screws are secured into these holes on the outer shell of the battery core 6, it will naturally form the threads in the openings. Obviously, threads can also be formed in the holes on the outer shell of the battery core 6 as well; if so, a harder material can be used for the top-side plate of the outer shell of the battery core 6, such as stainless steel. This method increases the hold between the cover 1 and the battery core 6.

In order to increase the hold and the seal between the cover 1 and the battery core 6, adhesive sealer can be applied to the screws and between the battery core 6 and the cover 1. By using the screws in combination with the adhesive sealer, the cover 1 and the battery core 6 can be tightly fastened. On the bottom of the battery core 6, there is also a bottom plate 7. The bottom plate 7 is also made by injection molding using rubber or plastic, and is glued on to the battery core 6 by adhesive sealer.

Furthermore, there can be placement holes (Fig. 2, 18) near the opening on the top of the battery core. Small position notches on the cover at positions corresponding to the position holes (Fig. 2, 18) on the top of the battery core 6.

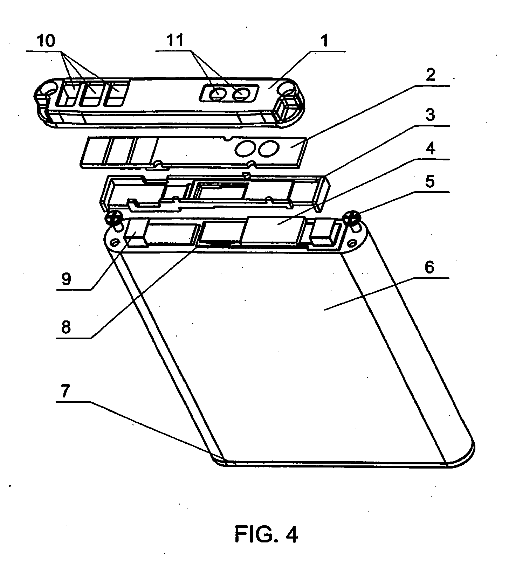

Figure 4 shows an illustration of another embodiment of the present invention of a lithium ion battery. It differs from the first embodiment in several respects. The top-end cover is formed by a top cover 1 and a structural support 3. The structural support 3 supports the battery protective circuit 2, where the battery protective circuit 2 is placed between the top cover 1 and the structural support 3. The structural support 3 is also separately made by injection molding using rubber or plastic, and glued to the battery core 6 using adhesive sealer. The protective unit 4 is placed under the support 3. The support 3 provides protection and insulation functions to the battery protective circuit 2, ensuring the safety of the battery protective circuit 2 and the battery. Because of the existence of the support 3, this embodiment does not require insulation paper 8.

When a top cover 1 and structural support 3 are used and the battery protective circuit is placed between the top cover 1 and structural support 3, this combination can be used to support and segregate the battery protective circuit 2 and used to define the position of the battery protective circuit 2 relative to the battery core 6.

In these embodiments, in the manufacturing and assembling process, in order to quickly and accurately position cover 1 (and/or structural support 3) on the battery core 6, position holes are provided near the openings on the top of the battery core 6. On the bottom of cover 1 (and/or structural support 3) and on the corresponding positions of the position holes on top of the battery core 6, small position notches are provided on the bottom of cover 1 (and/or structural support 3).

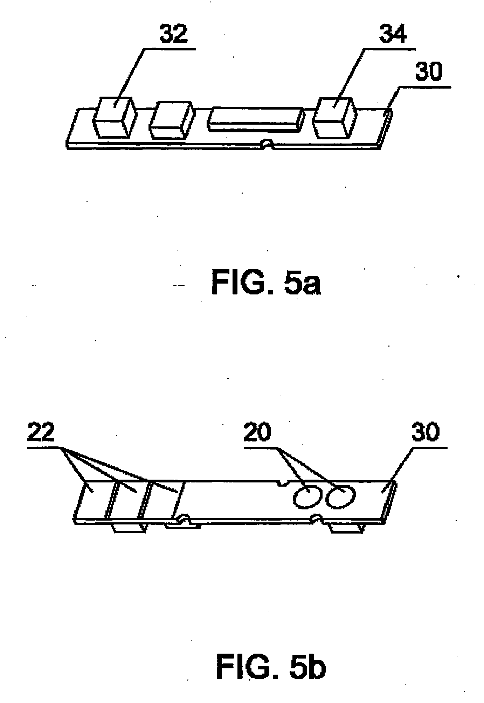

In yet another embodiment of the present invention, the battery protective circuit 2 is specifically designed to provide ease in the assembling of the battery and yet to ensure solid contact between the battery core 6 and the battery protective circuit 2. Referring to Fig. 5a, the battery protective circuit 2 is on a printed-circuit-board ("PCB") 30, and on the PCB 30 there is a first contact structure 32 providing contact between the PCB and the negative terminal of the battery core 6. There is also a second contact structure 34 providing contact between the PCB and the protective unit 4. The contact structures protrude away from the PCB and into the respective openings provided on the structural support 3. The contact structures 32, 34 can be formed using a conductive material and can be spring loaded. The contact structures 32, 34 can be mounted on the PCB using a variety of methods. Fig. 5b illustrates the other side of the PCB 30. Here, there are a plurality of test points 20 and a plurality of contact points 22 etched on the PCB. There are of course a number of other components on the PCB to carry out the functions provided by the PCB.

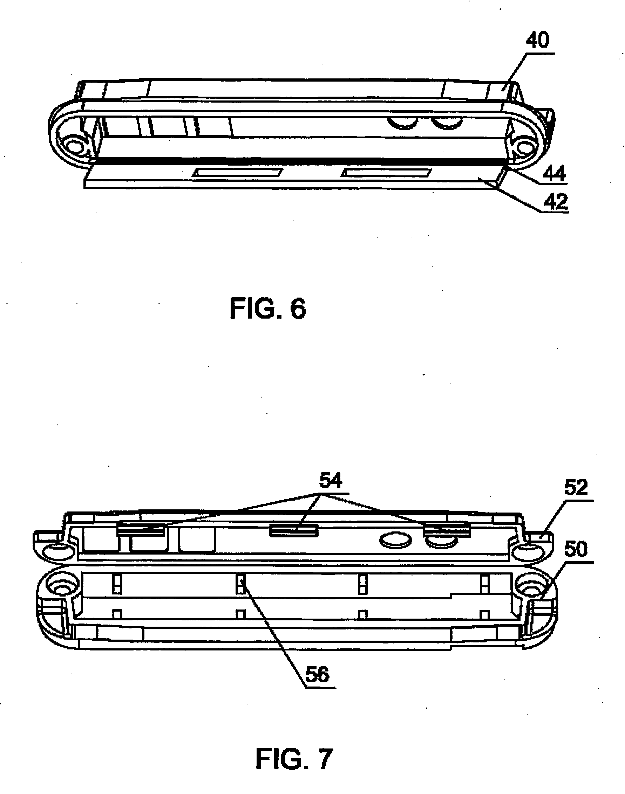

Still in yet another embodiment of the present invention, Fig. 6 illustrates a bottom view of a one-piece unit of the cover 40 and the structural support 42. The cover 40 and the structural support 42 are injection molded as one unit, further simplifying the assembling process. Here, the battery protective circuit (as described above) is inserted into the bottom of the cover 40 and the structural support 42 is then snapped into place. The structural support 42 is connected to the cover 40 via a thin plastic hinge 44; all of which are injection molded as a single piece. The entire structure is again secured to the top of the battery core via methods described above.

In yet still another embodiment of the present invention, Fig. 7 illustrates an angled, top view of a one piece cover body 50 with a cap 52. The battery protective circuit as described above can be placed into the cavity of the cover body 50 and the cap 52 simply snaps into place and can be adhesively sealed. A cover lock 54 can be provided to lock the cap to the cover body 50. Note that there are many types of cover lock and only one type is illustrated here. In the cavity of the cover, there are notches 56 for supporting the battery protective circuit. Again, this combination of cap and cover body are injection molded as one piece and can greatly simplify the assembly process while keeping the manufacturing costs of the cap and cover body low.

While the present invention has been described with reference to certain preferred embodiments, it is to be understood that the present invention is not to be limited to such specific embodiments. Rather, it is the inventor's contention that the invention be understood and construed in its broadest meaning as reflected by the following claims. Thus, these claims are to be understood as incorporating and not only the preferred embodiment described herein but all those other and further alterations and modifications as would be apparent to those of ordinary skilled in the art.

## Claims

1. A rechargeable battery, comprising:
a cover having two ends, said cover having a plurality of contact openings, a plurality of test openings, a screw opening on each of said two ends, and a position notch on each of said two ends;
a battery protective circuit on a PCB, said PCB on a first side having contact points for contacting said battery and test points for testing said battery; and
a battery core, wherein said battery core having an outer shell and a top-side plate welded to the outer shell of said battery core to seal said battery core, and said top-side plate having a terminal, a release valve, a fill hole, position holes and screw holes which receive the screws such that the screws do not contact with the terminals;
wherein said cover covering said battery protective circuit, and said cover and said battery protective circuit being secured on to said battery core to form an integrated battery; and wherein said PCB having a second side having at least one contact structure for electrically connecting said battery protective circuit with said battery core.

2. The rechargeable battery of claim 1 wherein said top-side plate has a 0.3 mm - 0.6 mm thickness.

3. The rechargeable battery of claims 1 or 2 where said battery protective circuit interacts with a safety unit connected between said battery core and said battery protective circuit, said safety unit providing a temperature detection function.

4. The rechargeable battery of claims 1-3 wherein said cover, said battery protective circuit and said battery core are elongated oval shaped.

5. The rechargeable battery of claims 1-4 where said cover is first made by rubber or plastic using an injection molding method.

6. The rechargeable battery of claims 1-5 wherein said cover has position notches on the bottom of said cover, wherein said position notches corresponds to position holes on said battery core.

7. The rechargeable battery of claims 1-6 wherein a structural support is placed between said battery core and said cover, said structural support and said cover encasing said battery protective circuit.

8. A rechargeable battery according to claim 1, comprising:
a cover having an elongated rectangular shape with two opposite ends, said cover having a plurality of contact openings, a plurality of test openings, a screw opening on each of said two ends, and a position notch on each of said two ends; wherein said cover is made by injection molding using plastic or rubber;
a battery protective circuit on a PCB and on one side having contact points for contacting said battery and test points for testing said battery, said battery protective circuit providing functions preventing overcharging, excessive-discharge and excessive current;
a battery core having an elongated rectangular shape substantially matching the shape of said cover, wherein said battery core having a metal outer shell, and a top-side plate welded to said outer shell of said battery core to seal said battery core; wherein said top-side plate having a thickness of 0.3 mm - 0.6 mm and having disposed thereon a terminal, a release valve, a fill hole, position holes and screw holes; and
a structural support placed between said battery core and said cover, said structural support and said cover encasing said battery protective circuit;
wherein said cover covering said battery protective circuit, and said cover and said battery protective circuit being secured on to said battery core to form an integrated battery; and wherein said battery core having positive and negative terminals connected to said battery protective circuit and, through said battery protective circuits, to contact plates exposed through said cover.

9. The rechargeable battery of claim 8 where said battery protective circuit interacts with a safety unit connected between said battery core and said battery protective circuit, said safety unit providing a temperature detection function.

10. The rechargeable battery of claims 8 or 9 wherein said cover and said structural support are connected by a hinge and said cover, said structural support and said hinge are injection molded as a single unit.

## Patentansprüche

1. Eine wiederaufladbare Batterie umfassend:
eine Abdeckplatte mit zwei Enden, wobei die Abdeckplatte mehrere Kontaktöffnungen und mehrere Testöffnungen aufweist sowie an jedem Ende eine Öffnung für eine Schraube und eine Positionierungskerbe;
eine Batterieschutzschaltung auf einem PCB, wobei das PCB auf einer Seite Kontaktpunkte aufweist zum in Kontakt bringen von besagter Batterie und Testpunkte zum Testen besagter Batterie; und
einen Batteriekern, wobei besagter Batteriekern eine äussere Hülle hat und eine obere Platte, die auf die äussere Hülle der Batterie geschweisst ist um den Batteriekern zu verschllessen und wobei besagte obere Platte einen Pol, ein Entlastungsventil, ein Einfüll-loch, ein Positionierungsloch aufweist sowie Schraub-löcher in die die Schrauben derart eingeschraubt werden, dass die Schrauben nicht mit den Polen in Kontakt treten können; wobei besagte Abdeckplatte die die Batterieschutzschaltung abdeckt und besagte Batterieschutzschaltung auf besagtem Batteriekern befestigt sind um eine integrierte Batterie zu bilden; und wobei besagtes PCB eine zweite Seite aufweist, die mindestens eine Kontaktstruktur hat um besagte Batterieschutzschaltung mit besagtem Batteriekern elektrisch zu verbinden.

2. Wiederaufladbare Batterie gemäss Anspruch 1, wobei besagte obere Platte 0.3-0.6mm dick ist.

3. Wlederaufladbare Batterie gemäss Anspruch 1 oder 2, wobei besagte Batterieschutzschaltung mit einer Sicherheitseinheit in Wechselwirkung steht, wobei sich die Sicherheitseinheit zwischen besagtem Batteriekern und besagter Batterieschutzschaltung befindet und über eine Temperaturerfassungsfunktion verfügt.

4. Wiederaufladbare Batterie gemäss Anspruch 1-3, wobei besagte Abdeckplatte besagte Batterleschutzschaltung und besagter Batteriekern eine länglich ovale Form aufweisen.

5. Wiederaufladbare Batterie gemäss Anspruch 1-4, wobei besagte Abdeckplatte Im Spritzgussverfahren aus Gummi oder Plastik hergestellt wird.

6. Wiederaufladbare Batterie gemäss Anspruch 1-5, wobei besagte Abdeckplatte an der Unterseite Positionierungskerben aufweist, wobei besagte Positionierungskerben Positionierungslöchern am Batteriekern entsprechen.

7. Wiederaufladbare Batterie gemäss Anspruch 1-6, wobei sich zwischen Batteriekern und Abdeckplatte ein Unterstützungselement befindet, wobei besagtes Unterstützungelement und besagte Abdeckplatte die Batterieschutzschaltung umschliessen.

8. Wiederaufladbare Batterie gemäss Anspruch 1 umfassend
eine Abdeckplatte in langgestreckter rechteckiger Form mit zwei gegenüber-liegenden Enden, wobei die Abdeckplatte mehrere Kontaktöffnungen und mehrere Testöffnungen aufweist sowie an jedem Ende eine Öffnung für eine Schraube und eine Positionierungskerbe, wobei besagte Abdeckplatte im Spritzgussverfahren aus Gummi oder Plastik hergestellt wird;
eine Batterieschutzschaltung auf einem PCB, wobei das PCB auf einer Seite Kontaktpunkte aufweist zum in Kontakt bringen besagter Batterie und Testpunkte zum Testen besagter Batterie, wobei besagte Batterieschutzschaltung dazu dient Überladung, Tiefentladung und Überströme zu verhindern,
einen Batteriekern in langgestreckter rechteckiger Form der im wesentlichen die Form der Abdeckplatte hat, wobei der Batteriekern eine äussere Hülle aus Metall hat und eine obere Platte, die auf die äussere Hülle der Batterie geschweisst ist um den Batteriekern zu verschliessen; wobei besagte obere Platte 0.3-0.6mm dick ist und wobei besagte obere Platte einen Pol, , ein Entlastungsventil, ein Einfüll-loch, ein Positionierungsloch sowie Schraublöcher aufweist und, wobei sich zwischen Batteriekern und Abdeckplatte ein Unterstützungselement befindet, wobei besagtes Unterstützungselement und besagte Abdeckplatte die Batterieschutzschaltung umschliessen, wobei besagte Abdeckplatte, die die Batterieschutzschaltung abdeckt, auf besagtem Batteriekern befestigt ist um eine integrierte Batterie zu bilden und wobei besagter Batteriekern, der positive und negative Pole aufweist, die mit besagter Batterieschutzschaltung verbunden sind und durch besagte Batterieschutzschaltung mit Platten in Kontakt steht, die mit besagter Abdeckplatte in Verbindung stehen.

9. Wiederaufladbare Batterie gemäss Anspruch 8, wobei besagte Batterieschutzschaltung mit einer Sicherheitseinheit in Wechselwirkung steht, wobei sich die Sicherheitseinheit zwischen besagtem Batteriekern und besagter Batterieschutzschaltung befindet und über eine Temperaturerfassungsfunktion verfügt.

10. Wiederaufladbare Batterie gemäss Anspruch 8 oder 9, wobei besagte Abdeckplatte und besagtes Unterstützungselement durch ein Scharnier verbunden sind, wobei besagtes Unterstützungselement und besagtes Scharnier als eine Einheit im Spritzgussverfahren hergestellt werden.

## Revendications

1. Une batterie rechargeable, comprenant:
un couvercle ayant deux extrémités, ledit couvercle ayant une pluralité d'ouvertures de contact, une pluralité d'ouvertures de test, une ouverture de vis sur chacune desdites deux extrémités, et une entaille de position sur chacune desdites deux extrémités;
un circuit de protection de batterie sur un PCB, ledit PCB ayant des points de contact sur un premier côté pour entrer en contact avec ladite batterie et des points de test pour tester ladite batterie, et
un noyau de batterie, dans lequel ledit noyau de la batterie ayant une coque extérieure et une plaque supérieure latérale soudée à la coque extérieure dudit noyau de batterie pour sceller ledit noyau de la batterie, et plaque supérieure latérale ayant une borne, une soupape de décharge, un trou de remplissage, les trous de position et des trous de vis qui reçoivent les vis de telle sorte que la vis n'est pas en contact avec les bornes;
dans lequel ledit couvercle couvrant ledit circuit de protection de batterie, et ledit couvercle et ledit circuit de protection de batterie étant fixée audit noyau de batterie pour former une batterie intégrée, et dans lequel ledit PCB comportant une deuxième face comportant au moins une structure de contact pour relier électriquement ledit circuit de protection de batterie avec ledit noyau de la batterie.

2. La batterie rechargeable selon la revendication 1, dans laquelle ladite plaque supérieure latérale à une épaisseur de 0,3 à 0,6 mm.

3. La batterie rechargeable selon les revendications 1 ou 2, où ledit circuit de protection de batterie interagit avec une unité de sécurité connectée entre ledit noyau de la batterie et ledit circuit de protection de batterie, ladite unité de sécurité fournissant une fonction de détection de la température.

4. La batterie rechargeable selon les revendications 1-3, dans lequel ledit couvercle, ledit circuit de protection de batterie et ledit noyau de la batterie sont de forme ovale allongée.

5. La batterie rechargeable selon les revendications 1-4, où ledit couvercle est d'abord fait de caoutchouc ou de plastique en utilisant une méthode de moulage par injection.

6. La batterie rechargeable selon les revendications 1-5, dans lequel ledit couvercle comporte des encoches de position sur la fond dudit couvercle, dans lequel lesdites encoches de position correspondent aux positions des trous sur ledit noyau de la batterie.

7. La batterie rechargeable selon les revendications 1-6, dans lequel un support de structure est placé entre ledit noyau de la batterie et ledit couvercle, ledit support de structure et ledit couvercle enveloppant ledit circuit de protection de batterie.

8. Une batterie rechargeable selon la revendication 1, comprenant:
un couvercle ayant une forme rectangulaire allongée avec deux extrémités opposées, ledit couvercle ayant une pluralité d'ouvertures de contact, une pluralité d'ouvertures de test, une ouverture de vis sur chacune desdites deux extrémités, et une entaille de position sur chacune desdites deux extrémités, dans lequel ledit couvercle est fait par moulage par injection à l'aide de plastique ou de caoutchouc;
un circuit de protection de batterie sur un PCB, ainsi que sur un côté ayant des points de contact pour contacter ladite batterie et des points de test pour tester ladite batterie, ledit circuit de protection de batterie fournissant des fonctions empêchant la surcharge, une décharge excessive et un courant excessif;
un noyau de batterie ayant une forme rectangulaire allongée correspondant sensiblement à la forme de ladite couverture, dans lequel ledit noyau de la batterie ayant une coque métallique extérieure, et une plaque supérieure latérale soudé à ladite coque extérieure dudit noyau de batterie pour sceller ledit noyau de la batterie; dans lequel ladite plaque supérieure latérale ayant une épaisseur de 0,3 mm - 0,6 mm et sur lequel est disposé une borne, une soupape de décharge, un trou de remplissage, des trous de position et des trous de vis, et
un support de structure placé entre ledit noyau de la batterie et ledit couvercle, ledit support de structure et ledit couvercle enveloppant ledit circuit de protection de batterie;
dans lequel ledit couvercle couvrant ledit circuit de protection de batterie, et ledit couvercle et ledit circuit de protection de batterie étant fixé audit noyau de batterie pour former une batterie intégrée, et dans lequel ledit noyau de la batterie présentant des bornes positive et négative connectées audit circuit de protection de batterie et, à travers ledit circuit de protection de batterie, pour entrer en contact avec les plaques exposées à travers ledit couvercle.

9. La batterie rechargeable selon la revendication 8, dans lequel ledit circuit de protection de batterie interagit avec une unité de sécurité connectée entre ledit noyau de la batterie et ledit circuit de protection de batterie, ladite unité de sécurité fournissant une fonction de détection de température.

10. La batterie rechargeable selon les revendications 8 ou 9, dans lequel ledit couvercle et ledit support de structure sont reliés par une charnière et ledit couvercle, ledit support de structure et ladite charnière sont moulés par injection en une seule unité.
